(19) Europäisches Patentamt

European Patent Office

Office européen des brevets

(11) **EP 1 992 501 B1**

(12) **EUROPEAN PATENT SPECIFICATION**

(45) Date of publication and mention of the grant of the patent:
**30.03.2011 Bulletin 2011/13**

(21) Application number: **07706514.2**

(22) Date of filing: **10.01.2007**

(51) Int Cl.:
***B60C 5/00*** (2006.01)

(86) International application number:
**PCT/JP2007/050167**

(87) International publication number:
**WO 2007/102279 (13.09.2007 Gazette 2007/37)**

(54) **TIRE NOISE REDUCTION DEVICE AND PNEUMATIC TIRE**

REIFENLÄRMVERRINGERUNGSVORRICHTUNG UND LUFTREIFEN

DISPOSITIF REDUCTEUR DE BRUIT DE PNEU ET PNEU

(84) Designated Contracting States:
**DE**

(30) Priority: **09.03.2006 JP 2006064399**

(43) Date of publication of application:
**19.11.2008 Bulletin 2008/47**

(73) Proprietors:
- **The Yokohama Rubber Co., Ltd.**
  **Minato-ku**
  **Tokyo 105-8685 (JP)**
- **Mitsubishi Jidosha Kogyo Kabushiki Kaisha**
  **Tokyo 108-8410 (JP)**

(72) Inventors:
- **IKEDA, Toshiyuki**
  **Hiratsuka-shi, Kanagawa 2548601 (JP)**

- **TANNO, Atsushi**
  **Hiratsuka-shi, Kanagawa 2548601 (JP)**
- **AKIYOSHI, Yasuji**
  **Minato-ku, Tokyo 1088410 (JP)**
- **TAKETANI, Masayuki**
  **Minato-ku, Tokyo 1088410 (JP)**

(74) Representative: **HOFFMANN EITLE**
**Patent- und Rechtsanwälte**
**Arabellastraße 4**
**81925 München (DE)**

(56) References cited:
**WO-A-2005/012006      WO-A-2005/012008**
**WO-A1-2005/087515      JP-A- 2003 226 104**
**JP-A- 2005 075 206      JP-A- 2005 212 577**

**Description**

TECHNICAL FIELD

The present invention relates to a tire noise reduction device and a pneumatic tire, and more particularly, to a tire noise reduction device and a pneumatic tire with the tire noise reduction device in which vibration of the body of a vehicle can be reduced.

TECHNICAL BACKGROUND

A cavity resonance phenomenon that occurs in a closed tire cavity formed between the rim of a wheel and a pneumatic tire mounted on the rim is a major factor of tire noise. Noise around 250 Hz regularly heard during traveling, and impact noise generated in driving over joints or the like of a road, for example, are involved in the cavity resonance phenomenon.

As a tire noise reduction device for reducing noise caused by such a cavity resonance phenomenon, one is know having sound absorbing members disposed in a cavity of a tire in such a manner that the cross-sectional area of the tire cavity varies in the circumferential direction of the tire (see Japanese Patent Application *Kokai* Publication 2003-226104, for example). While cavity resonance frequencies are changed with rotation of a wheel every second by varying the cross-sectional shape of the tire cavity in the circumferential direction of the tire, cavity resonance noise is effectively reduced by a sound absorbing effect of the sound absorbing members.

A pneumatic tire having such a tire noise reduction device, however, results in uneven mass distribution about its circumference. Therefore, uniformity is deteriorated during traveling at a high speed, which creates a problem of increasing vibration of the body of a vehicle.

To solve the problem, there has been proposed a tire noise reduction device which uniformize the mass distribution of a pneumatic tire having the tire noise reduction device by arranging a mass adjustment member (see Japanese Patent Application *Kokai* Publication 2005-212577, for example). However, a problem of an increase in total mass of the tire noise reduction device will arise from adding the mass adjustment member. Further, since the first harmonic component of the vehicle body vibration is deteriorated during traveling at a high speed, an effect of reducing the vehicle body vibration is low, and the reduction in the vehicle body vibration has not been sufficiently obtained.

WO 2005/012006 A1 discloses a combination of features falling within the scope of the preamble of claim 1.

SUMMARY OF THE INVENTION

According to the present invention, there is provided a tire noise reduction device to be mounted on an inner surface of a tread portion of a pneumatic tire facing a cavity thereof, comprising: sound absorbing members disposed on the inner surface of the tread portion opposite to each other at two locations around a circumference thereof, the sound absorbing members being formed of a porous material; and an annular fixing elastic band for fixing the sound absorbing members to the inner surface of the tread portion, characterized in that: the fixing elastic band has an outer peripheral length L (mm) fulfilling a following expression:

$$0.99L0 \leqq L \leqq 1.01L0$$

$$L0 \simeq (1-0.1 \times (Wa/We)) \times Li$$

Wa being the mass (g) of the sound absorbing members, We being the total mass (g) of the tire noise reduction device, and Li being the inner peripheral length (mm) of the tire; and a ratio Wa/We of the mass Wa of the sound absorbing members to the total mass We of the tire noise reduction device is in a range of 0.1 to 0.5.

The pneumatic tire of the present invention is characterized by having the above tire noise reduction device mounted on the inner surface of the tread portion.

An advantage achievable with embodiments of the present invention is to provide a tire noise reduction device and a pneumatic tire in which vibration of the body of a vehicle can effectively be reduced without an increase in weight while an effect of reducing cavity resonance noise is maintained.

With embodiments of the present invention described above, by specifying the outer peripheral length L of the fixing elastic band as mentioned above, both of the first harmonic component and the second harmonic component of the vibration element (TFV: Tractive Force Variation) that causes vibration of the body of a vehicle are restricted in a balanced manner, thus enabling the vehicle body vibration to be effectively reduced. In addition, it suffices only to adjust the length of the fixing elastic band without adding a mass adjustment member, which enables an increase in weight of the tire noise reduction device to be avoided, and an effect of reducing cavity resonance <u>noise</u> to be maintained.

BRIEF DESCRIPTION OF THE DRAWINGS

To enable a better understanding of the present invention, and to show how the same may be carried into effect, reference will now be made, by way of example only, to the accompanying drawings, in which:-

[FIG. 1] FIG. 1 is a cross-sectional view showing an embodiment of a tire noise reduction device according to the present invention in a state where it is attached to a pneumatic tire mounted on a rim;
[FIG. 2] FIG. 2 is a cross-sectional view of the tire noise reduction device cut at a position corresponding to the equatorial plane of the tire;
[FIG. 3] FIG. 3 is a graph showing a relationship between the length of a fixing elastic band and vibration;
[FIG. 4] FIG. 4 is a graph showing a relationship between the ratio of the optimum value of the fixing elastic band length to the inner peripheral length of the tire and the ratio of the mass of the sound absorbing members to the total mass of the tire noise reduction device; and
[FIG. 5] FIG. 5 is a graph showing results of vibration evaluation testing.

DETAILED DESCRIPTION

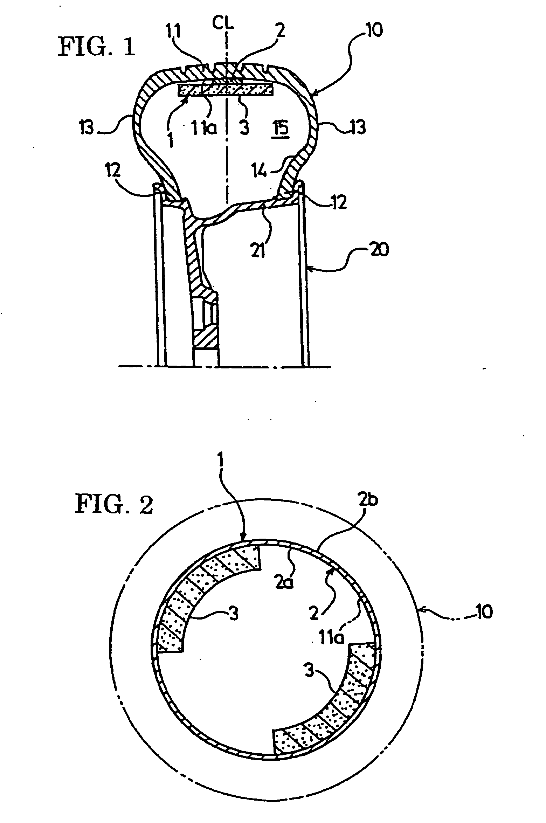

An embodiment of the present invention will be described below in detail with reference to the accompanying drawings.
Referring to FIG. 1, reference numeral 1 denotes a tire noise reduction device, and reference numeral 10 denotes a pneumatic tire having the tire noise reduction device 1. The pneumatic tire 10 is shown in a state where it is mounted on the rim 21 of a wheel 20.
The pneumatic tire 10 has a tread portion 11, right and left bead portions 12, and right and left sidewall portions 13 through which the tread portion 11 and the bead portions 12 are connected. A space surrounded by the inner surface 14 of the tire is the cavity of the pneumatic tire 10. The pneumatic tire 10 is attached to the wheel 20 in such a way that the cavity 15 is closed by the rim 21.
Although not shown in the drawing, a carcass ply extends between the right and left bead portions 12 inside the tire, and a plurality of belt plies are provided radially outwardly of the carcass ply in the tread portion 11. A bead core is embedded in each of the right and left bead portions 12, and the opposite ends of the carcass ply are turned up around the bead cores from the inner side of the tire to the outer side thereof.
The tire noise reduction device 1, which is to be mounted on an inner surface 11a of the tread portion 11 of the pneumatic tire 10 facing the cavity 15, comprises an annular fixing elastic band 2, and sound absorbing members 3 disposed by the fixing elastic band 2 on the inner surface 11a of the tread portion 11 opposite to each other at two locations around its circumference, as shown in FIG. 2.
The fixing elastic band 2 is made from an elastic body in the form of an endless ring, and the tire noise reduction device 1 is designed to be mounted on the inner surface 11a of the tread portion 11 by an elastic force of the fixing elastic band 2. As the material of the fixing elastic band 2, any one which can give mountable elasticity is used, and its examples preferably include metals such as stainless steel, and synthetic resins such as nylon resin and polypropylene resin. The size of the fixing elastic band 2 is the same as that of a conventional one; its width is preferably in the range of 10 to 30 mm, and its thickness is preferably in the range of 0.5 to 2.0 mm.
The sound absorbing members 3 are respectively attached with an adhesive agent to the radially inner surface 2a of the fixing elastic band 2 at positions away from each other at 180°. The sound absorbing members 3 disposed opposite to each other at the two locations around the circumference regularly change in the circumferential direction of the tire the cross-sectional area of the tire cavity 15 in tire meridian cross section.
The sound absorbing members 3 are formed of a porous material. As the porous material, a resin foam is preferably used, and in particular, a polyurethane foam having a low density is preferably used. Regarding the configuration of bubbles of a foamed one obtained by foaming the resin foam, continuous bubbles with adjacent ones communicating with each other is preferable in terms of a sound absorbing effect. Concerning the size of the sound absorbing members 3, it is preferable that their width be in the range of 40 to 90% of the cross-sectional width of the tire, and their thickness be in the range of 5 to 50 mm, as is conventional. The width of the sound absorbing members 3 may be constant or varied.
In the above-described tire noise reduction device 1 of the present invention, the fixing elastic band 2 has an outer peripheral length L (mm) which is a circumferential length of its radially outer surface 2b, the outer peripheral length satisfying the following expression:

$$0.99L0 \leqq L \leqq 1.01L0$$

$$L0 = (1 - 0.1 \times (Wa/We)) \times Li$$

Wa being the mass (g) of the sound absorbing members, We being the total mass (g) of the tire noise reduction device, and Li being the inner peripheral length (mm) of the tire.

Note that the inner peripheral length Li of he tire referred here is the circumferential length of the inner surface 11a of the tread portion 11 measured at the position of the tire equatorial plane CL of the pneumatic tire 10 before assembly to the rim.

The present inventors have found the following through intense studies and repeated experiments regarding an increase in vibration of the body of a vehicle arising from uneven mass distribution of a pneumatic tire with the tire noise reduction device about its circumference.

That is, a pneumatic tire with a tire noise reduction device having sound absorbing members provided opposite to each other at two locations about its circumference, as shown in FIG. 2, has a first harmonic component and a second harmonic component which are influential as components of a vibration element (TFV: Tractive Force Variation) which vibrates a vehicle body during traveling at a high speed. The first harmonic component is a vibration component created by rotation of the tire noise reduction device with its gravity center being at an eccentric position from the axis of rotation of the tire. As the total mass of the tire noise reduction device increases, and as the eccentric amount of the gravity center of the tire noise reduction device from the axis of rotation of the tire is greater, the first harmonic component is greater, increasing the vehicle body vibration during traveling at a high speed.

On the other hand, the second harmonic component is a vibration component created by the sound absorbing members 3 that circulate with rotation of the tire, the sound absorbing members changing their circulation orbits due to deflection of a portion of the tread which comes into engagement with a ground surface. As the mass of the sound absorbing members 3 increase, and as the change of the orbits is greater, the second harmonic component is greater, increasing the vehicle body vibration during traveling at a high speed.

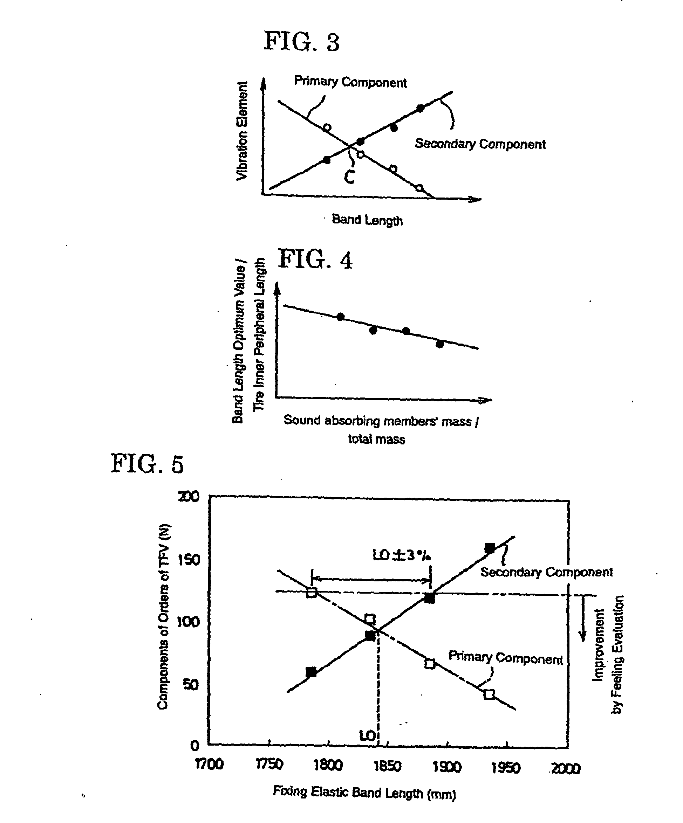

The present inventors, therefore, took particular note of the fixing elastic band of the tire noise reduction device. By adjusting the length of the fixing elastic band, the total mass of the tire noise reduction device, the eccentric amount of the gravity center of the tire noise reduction device from the axis of rotation of the tire, and the orbit change amount of the sound absorbing members increase or decrease. Consequently, the same ones were used for the sound absorbing members, and the first harmonic component and second harmonic component of the vibration element (TFV) were examined changing only the length of the fixing elastic band. As a result, it was found that as the length of the fixing elastic band 2 was made longer, the first harmonic component of the vibration element became less and the second harmonic component of the vibration element became greater, and that as the length of the fixing elastic band 2 was made shorter, the first harmonic component of the vibration element became greater and the second harmonic component of the vibration element became less, as shown in FIG. 3, and that the first harmonic component and the second harmonic component of the vibration element had an opposite relationship with each other, and that a point C where the two crossed with each other was the optimum value of the length of the fixing elastic band that decreased both the first harmonic component and the second harmonic component of the vibration element in a balanced manner.

Further, the optimum value of the length of the fixing elastic band was examined in relationship to other elements associated therewith. As a result, it was found that the ratio (band length optimum value/tire inner peripheral length) of the optimum value of the length of the fixing elastic band to a tire inner peripheral length which was the inner peripheral length, at a location of the equatorial plane of the tire, of the inner surface of the tread potion to which the fixing elastic band was attached had a fixed relation with the ratio (sound absorbing members' mass/total mass) of the mass of the sound absorbing members to the total mass of the tire noise reduction device, and that, as shown in FIG. 4, as the ratio (sound absorbing members' mass/total mass) increased, the ratio (band length optimum value/tire inner peripheral length) became less, and that, on the other hand, the ratio (sound absorbing members' mass/total mass) decreased, the ratio (band length optimum value/tire inner peripheral length) became greater, having a relationship fulfilling the following expression.

Ratio (band length optimum value/tire inner peripheral length)

=1-0.1×Ratio (sound absorbing members' mass/total mass)

In the present invention, the outer peripheral length L of the radially outer surface 2b of the fixing elastic band 2 is, therefore, defined as mentioned above. This restricts the first harmonic component and the second harmonic component of the vibration element (TFV) that causes vibration of the body of a vehicle, enabling the vehicle body vibration to be effectively reduced. On the other hand, since it suffices only to adjust (make shorter than before) the length of the fixing elastic band 2, an increase in weight is not incurred, and an effect of reducing cavity resonance noise is not impaired.

If the outer peripheral length L of the fixing elastic band 2 is less than 0.97L0, it is difficult to effectively reduce the vehicle body vibration because of an increase in the first harmonic component of the vibration element. If the outer peripheral length L of the fixing elastic band 2 is greater than 1.03L0, it is difficult to effectively reduce the vehicle body vibration because of an increase in the second harmonic component of the vibration element.

The outer peripheral length L of the fixing elastic band 2 is, however, from 0.99L0 to 1.01L0, and preferably is L0, from the viewpoint of effectively reducing the vehicle body vibration.

In embodiments of the present invention, the outer peripheral length L of the fixing elastic band 2 is preferably in the range of 88% to 98% of the tire inner peripheral length Li in terms of durability. If the outer peripheral length L is less than 88% of the tire inner peripheral length Li, the tire noise reduction device 1, not fixed to the tire inner surface increases its movement, whereby the sound absorbing members 3 are worn because they rub against the tire inner surface, resulting in that damage to the sound absorbing members 3 is apt to occur. If the outer peripheral length L is greater than 98% of the tire inner peripheral length Li, buckling is apt to happen to the fixing elastic band 2, which deteriorates durability of the fixing elastic band 2. The outer peripheral length L of the fixing elastic band 2 is more preferably 92% to 97% of the tire inner peripheral length Li, and even more preferably 93% to 95%.

The ratio Wa/We of the mass Wa of the sound absorbing members 3 to the total mass We of the tire noise reduction device 1 is in the range of 0.1 to 0.5. If the ratio Wa/We is less than 0.1, the percentage of the sound absorbing members 3 is so low that it is insufficient for the tire noise reduction device 1 to effectively reduce cavity resonance noise. If the ratio Wa/We is greater than 0.5, the percentage of the mass of the sound absorbing members 3 is so high that the second harmonic component of the vibration element can not be lowered to a sufficient level even if reduction of the vehicle body vibration is attempted using the band length.

It is preferable that the total mass We of the tire noise reduction device 1 be equal to or less than 3 % of the mass (total mass) of a pneumatic tire on which the tire noise reduction device is mounted, whereby the mass of the tire noise reduction device 1 is so lowered, compared to that of a pneumatic tire on which it is mounted, that the components of respective orders of the vibration element (TFV) during traveling at a high speed are totally reduced, enabling the vehicle body vibration to be more reduced. The lower limit of the total mass We of the tire noise reduction device 1 is preferably equal to or more than 0.2 % of the mass of a pneumatic tire on which it is mounted from the viewpoint of ensuring sound absorbing characteristics of the sound absorbing members.

EXAMPLE

Prepared were tire noise reduction devices (test samples) 1 to 4 to be mounted on pneumatic tires having a tire size of 215/60R16 (tire inner peripheral length: 1970 mm), in which the outer peripheral lengths L of the tire noise reduction devices were varied as shown in Table 1. An urethane foam (width of 150mm, length of 480 mm, and thickness of 20 mm) was used for each sound absorbing member of each test sample. The total mass of the two sound absorbing members of each test sample was 82 g. The test samples each had a mass of 125 g, and the fixing elastic band of each test sample was formed of a polypropylene resin. Note that the test sample 4 is a prior art tire noise reduction device.

Evaluation testing for vibration was carried out on the test samples 1 to 4, according to the testing method shown below, obtaining the results shown in Table 1. A graph plotted with the results is also shown in FIG. 5.

Evaluation Testing for Vibration

1. TFV (Tractive Force Variation)

Each of the test samples 1 to 4 was mounted on a pneumatic tire having a tire size of 215/60R16. The pneumatic tire having it was assembled to a rim having a rim size of 16×7JJ, inflated to an air pressure of 210 kPa, and mounted on a drum testing machine. The first harmonic component and second harmonic component of TFV were measured under conditions of a load of 4.7 kPa and a speed of 120 km/h. Further, the test samples 1 to 4 were removed from the pneumatic tires having the test samples 1 to 4, and the first harmonic component and second harmonic component of TFV of the removed pneumatic tires were measured under the same conditions as the above. The differences between values measured in the two were the first harmonic component and second harmonic component of TFV of each of the test samples 1 to 4.

2. Feeling Evaluation

The respective test samples 1 to 4 were mounted on pneumatic tires as in the above, and the pneumatic tires were attached to a passenger vehicle of 2000 cc displacement. Feeling testing for vibration of the body of the vehicle was conducted by a test driver. The evaluation results thereof are represented by an index where the test sample 4 is 100. As the value is less, the vehicle body vibration is lower. An index equal to or less than 95 means a remarkable effect. **[0036]**

[Table 1]

|  | Outer Peripheral Length L (mm) | First Harmonic Component (N) | Second Harmonic Component (N) | Feeling Evaluation |
| --- | --- | --- | --- | --- |
| Test Sample 1 | 1885 (1.024L0) | 67 | 119 | 94 |
| Test Sample 2 | 1835 (1.001L0) | 102 | 88 | 90 |
| Test Sample 3 | 1785 (0.970L0) | 122 | 58 | 95 |
| Test Sample 4 | 1935 (1.051L0) | 43 | 161 | 100 |

As seen from Table 1, the test samples 1 to 3 in which the outer peripheral length L of the fixing elastic band fulfills the range of 0.97L0 to 1.03L0 can effectively reduce the vehicle body vibration.

INDUSTRIAL APPLICABILITY

The tire noise reduction device of the present invention having the aforementioned excellent effect can be very effectively utilized as a tire noise reduction device to be mounted on the inner surface of the tread portion of a pneumatic tire facing the cavity thereof.

**Claims**

1. A tire noise reduction device (1) to be mounted on an inner surface of a tread portion of a pneumatic tire (10) facing a cavity (15) thereof, comprising:

   sound absorbing members (3) disposed on the inner surface (11a) of the tread portion (11) opposite to each other at two locations around a circumference thereof, the sound absorbing members (3) being formed of a porous material; and
   an annular fixing elastic band (2) for fixing the sound absorbing members (3) to the inner surface (11a) of the tread portion (11),
   **characterized in that**:

   the fixing elastic band (2) has an outer peripheral length L (mm) fulfilling a following expression:

$$0.99L0 \leqq L \leqq 1.01L0$$

$$L0 = (1 - 0.1 \times (Wa/We)) \times Li$$

   Wa being the mass (g) of the sound absorbing members (3), We being the total mass (g) of the tire noise reduction device (1), and Li being the inner peripheral length (mm) of the tire; and
   a ratio Wa/We of the mass Wa of the sound absorbing members (3) to the total mass We of the tire noise reduction device (1) is in a range of 0.1 to 0.5.

2. The tire noise reduction device according to claim 1, wherein the outer peripheral length L is L0.

3. The tire noise reduction device according to claim 1 or 2, wherein the outer peripheral length L of the fixing elastic band is in a range of 88% to 98% of the tire inner peripheral length Li.

**4.** The tire noise reduction device according to claim 3, wherein the outer peripheral length L of the fixing elastic band is in a range of 92% to 97% of the tire inner peripheral length Li.

**5.** The tire noise reduction device according to claim 4, wherein the outer peripheral length L of the fixing elastic band is in a range of 93% to 95% of the tire inner peripheral length Li.

**6.** The tire noise reduction device according to any one of claims 1 to 5, wherein the total mass We of the tire noise reduction device is equal to or less than 3% of a mass of the pneumatic tire on which the tire noise reduction device is mounted.

**7.** The tire noise reduction device according to any one of claims 1 to 6, wherein the sound absorbing members are attached to a radially inner surface of the fixing elastic band.

**8.** A pneumatic tire having a tire noise reduction device according to any one of claims 1 to 7, the tire noise reduction device being mounted on the inner surface of the tread portion.

**Patentansprüche**

**1.** Einrichtung zur Verringerung von Reifengeräuschen (1), die an einer Innenfläche eines Laufflächenabschnitts eines Luftreifens (10), die einem Hohlraum (15) davon zugewandt ist, anzubringen ist, welche umfasst:

Geräuschabsorptionselemente (3), die auf der Innenfläche (11a) des Laufflächenabschnitts 11 an zwei gegenüberliegenden Orten um einen Umfang davon angeordnet sind, wobei die Geräuschabsorptionselemente (3) aus porösem Material ausgebildet sind; und
ein ringförmiges elastisches Fixierungsband (2) zum Fixieren der Geräuschabsorptionselemente (3) an der Innenfläche (11a) des Laufflächenabschnitts (11),
**dadurch gekennzeichnet, dass**:

das elastische Fixierungsband (2) eine Außenumfangslänge L (mm) aufweist, welche dem folgenden Ausdruck genügt:

$$0,99L0 \leq L \leq 1,01L0$$

$$L0 = (1 - 0,1 \text{x} (Wa/We)) \text{x} Li$$

wobei Wa die Masse (g) der Geräuschabsorptionselemente (3) ist, We die Gesamtmasse (g) der Einrichtung zur Verringerung von Reifengeräuschen (1) ist und Li die Innenumfangslänge (mm) des Reifens ist; und
das Verhältnis Wa/We der Masse Wa der Geräuschabsorptionselemente (3) zur Gesamtmasse We der Einrichtung zur Verringerung von Reifengeräuschen sich im Bereich von 0,1 bis 0,5 befindet.

**2.** Einrichtung zur Verringerung von Reifengeräuschen nach Anspruch 1, bei der die Außenumfangslänge L gleich L0 ist.

**3.** Einrichtung zur Verringerung von Reifengeräuschen nach Anspruch 1 oder 2, bei der die Außenumfangslänge L des elastischen Fixierungsbands sich im Bereich von 88% bis 98% der inneren Reifenumfangslänge Li befindet.

**4.** Einrichtung zur Verringerung von Reifengeräuschen nach Anspruch 3, bei der die Außenumfangslänge L des elastischen Fixierungsbands sich im Bereich von 92% bis 97% der inneren Reifenumfangslänge Li befindet.

**5.** Einrichtung zur Verringerung von Reifengeräuschen nach Anspruch 4, bei der die Außenumfangslänge L des elastischen Fixierungsbands sich im Bereich von 93% bis 95% der Innenumfangslänge des Reifens Li befindet.

**6.** Einrichtung zur Verringerung von Reifengeräuschen nach einem der Ansprüche 1 bis 5, bei der die Gesamtmasse We der Einrichtung zur Verringerung von Reifengeräuschen gleich oder kleiner als 3% einer Masse des Luftreifens ist, an dem die Einrichtung zur Verringerung von Reifengeräuschen angebracht ist.

7. Einrichtung zur Verringerung von Reifengeräuschen nach einem der Ansprüche 1 bis 6, bei der die Geräuschabsorptionselemente an einer radialen Innenfläche des elastischen Fixierungsbands angebracht sind.

8. Luftreifen, der eine Einrichtung zur Verringerung von Reifengeräuschen nach einem der Ansprüche 1 bis 7 aufweist, wobei die Einrichtung zur Verringerung von Reifengeräuschen an der Innenfläche des Laufflächenabschnitts angebracht ist.

**Revendications**

1. Dispositif de réduction de bruit de pneu (1) devant être monté sur une surface intérieure d'une partie formant bande de roulement d'un pneu pneumatique (10) faisant face à une cavité (15) de celui-ci, comprenant :

   des éléments absorbeurs de son (3) disposés sur la surface intérieure (11a) de la partie formant bande de roulement (11) les uns en face des autres à deux emplacements autour d'une circonférence de celle-ci, les éléments absorbeurs de son (3) étant formés d'une matière poreuse ; et
   une bande élastique de fixation annulaire (2) pour fixer les éléments absorbeurs de son (3) à la surface intérieure (11a) de la partie formant bande de roulement (11);
   **caractérisé en ce que** :

   la bande élastique de fixation (2) a une longueur périphérique extérieure L (mm) satisfaisant à une expression suivante :

$$0,99 \ L0 \ \leq \ L \ \leq \ 1,01 \ L0$$

$$L0 \ = \ (1 \ - \ 0,1 \ \times \ (Wa \ / \ We)) \ \times \ Li$$

   Wa étant la masse (g) des éléments absorbeurs de son (3), We étant la masse totale (g) du dispositif de réduction de bruit de pneu (1), et Li étant la longueur périphérique intérieure (mm) du pneu ; et
   un rapport Wa / We de la masse Wa des éléments absorbeurs de son (3) sur la masse totale We du dispositif de réduction de bruit de pneu (1) est dans une plage de 0,1 à 0,5.

2. Dispositif de réduction de bruit de pneu selon la revendication 1, dans lequel la longueur périphérique extérieure L est L0.

3. Dispositif de réduction de bruit de pneu selon la revendication 1 ou 2, dans lequel la longueur périphérique extérieure L de la bande élastique de fixation est dans une plage de 88 % à 98 % de la longueur périphérique intérieure de pneu Li.

4. Dispositif de réduction de bruit de pneu selon la revendication 3, dans lequel la longueur périphérique extérieure L de la bande élastique de fixation est dans une plage de 92 % à 97 % de la longueur périphérique intérieure de pneu Li.

5. Dispositif de réduction de bruit de pneu selon la revendication 4, dans lequel la longueur périphérique extérieure L de la bande élastique de fixation est dans une plage de 93 % à 95 % de la longueur périphérique intérieure de pneu Li.

6. Dispositif de réduction de bruit de pneu, selon l'une quelconque des revendications 1 à 5, dans lequel la masse totale We du dispositif de réduction de bruit de pneu est inférieure ou égale à 3 % d'une masse du bandage pneumatique sur lequel le dispositif de réduction de bruit de pneu est monté.

7. Dispositif de réduction de bruit de pneu selon l'une quelconque des revendications 1 à 6, dans lequel les éléments absorbeurs de son sont attachés à une surface intérieure radiale de la bande élastique de fixation.

8. Pneu pneumatique ayant un dispositif de réduction de bruit de pneu selon l'une quelconque des revendications 1 à 7, le dispositif de réduction de bruit de pneu étant monté sur la surface intérieure de la partie formant bande de roulement.

FIG. 1

FIG. 2

## FIG. 3

## FIG. 4

## FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003226104 A
- JP 2005212577 A
- WO 2005012006 A1